# NEUE EUROPÄISCHE PATENTSCHRIFT

(11) **EP 0 328 025 B2**
(45) Veröffentlichungstag und Bekanntmachung des Hinweises auf die Entscheidung über den Einspruch: **23.08.1995**
(45) Hinweis auf die Patenterteilung: 11.12.1991
(21) Anmeldenummer: 89102021.6
(22) Anmeldetag: 06.02.1989
(51) Int. Cl.: F24C 7/08, G05D 23/19

(54) **Anordnung zur Eingabe und Anzeige von Einstellwerten, insbesondere in Haushaltsherde**
Input and display arrangement of control valves, specially for cooking appliances
Dispositif d'entrée et d'affichage des données de contrôle, spécialement pour cuisinières

(30) Priorität: 09.02.1988 DE 3803923
(43) Veröffentlichungstag der Anmeldung: 16.08.1989
(73) Patentinhaber: Bosch-Siemens Hausgeräte GmbH, 81669 München (DE)
(72) Erfinder: Husslein, Julius, Dipl.-Ing., D-8221 Vachendorf (DE); Wittauer, Günther, Dipl.-Ing., D-8225 Traunreut (DE); Waigand, Helmut, Dipl.-Ing., D-8221 St. Georgen (DE)

(56) Entgegenhaltungen:
- EP-A- 0 057 729
- EP-A- 0 156 716
- DE-A- 3 010 715
- DE-A- 3 039 514
- DE-A- 3 430 993
- DE-A- 3 730 602
- US-A- 4 241 364
- Handbuch der Elektronik, 1979, Seiten 611 bis 623

## Beschreibung

Die vorliegende Erfindung bezieht sich auf eine Anordnung zur Eingabe und Anzeige von Einstellwerten in Elektroherden zur Steuerung der Energiezuleitung an die thermischen und/oder die hochfrequenten Heizquellen unter Verwendung einer Temperatur-Zeit-Steuerschaltung, über die der Beginn und das Ende der Energiezufuhr und das dazwischen abzuarbeitende Temperatur-Zeit-Profil für die durch Eingabe vorgegebenen Garungsprozesse sowie die dafür eingesetzten Funktionseinheiten steuerbar sind, unter Verwendung von einer Mehrzahl von Funktions-Eingabeelementen und diesen zugeordneter Leuchtanzeigeelementen in einem Eingabe-/Anzeigefeld des Elektroherdes zur Eingabe und Anzeige der erforderlichen Garungsprozeß-Kriterien.

Es ist hinlänglich bekannt, insbesondere zur Abwicklung von Brat- und Backvorgängen eine Zeitschaltung einzusetzen, welche den Beginn und das Ende eines temperaturgeregelten Garungsprozesses schaltet. Insbesondere ausgelöst durch die Entwicklung in der Halbleiter-und in der Mikroprozessortechnik ist es auch bekannt geworden, Garungsprozesse automatisch zu steuern, bei welchen in unterschiedlichen vorgegebenen Garungsprozeß-Phasen unterschiedliche Heizungstemperaturwerte auftreten. Mit Hilfe dieser Anordnungen können verschiedene Garungsprozeßabläufe eingestellt werden. Die Garungsprozesse selbst laufen ab unter entsprechend dosierter Zufuhr von Wärmeenergie, ausgehend von thermischen Heizquellen, oder durch Zufuhr von Mikrowellenenergie. Beide Energiearten können bekannterweise auch gleichzeitig oder teilweise überlagert zur Beaufschlagung des Garguts herangezogen werden. Des weiteren können Garungsprozesse durch Beaufschlagung des Gargutes mit erhitzter, erwärmter oder kühler Luft vorteilhaft beeinflußt werden.

Es ist bekannt, Eingabeorgane und Anzeigeorgane für die Eingabe und Anzeige der eingegebenen und durchgeführten Garungsprozeß-Varianten und kombinationen vorzusehen. Die eingegebenen und/oder die ablaufenden Garungsprozeß-Informationen werden durch die Anzeigeelemente, die in diesem Fall hell gesteuert werden, angezeigt.

Es ist in diesem Zusammenhang weiterhin bekannt (DE-A-3010715), zum Zwecke des Hinweises der Bedienungsperson bereits während der Programmiereingabe auf falsche oder fehlende Eingaben, ein Bedienungstableau für die Programmierung eines mikrocomputergesteurten, elektrisch beheizten Brat- oder Backofens zu schaffen, bei weichem den Vorwahltasten, denen jeweils eine Leuchtdiode zugeordnet ist, für das Ende und die Dauer der Brat- oder Backzeitweitere Leuchtdioden zugeordnet werden. Durch Blinken, Leuchten und ggf. Erlöschen wird die Bedienungsperson über die vorgesehene richtige Programmierung informiert.

Ausgehend von diesem Stand der Technik ist es Aufgabe der vorliegenden Erfindung, eine Anordnung für die Eingabe und Anzeige von Garungsprozeß-kriterien für Haushaltsgeräte, insbesondere Elektroherde bereitzustellen, die der Bedienungsperson die Möglichkeit eröffnet, die mögliche Eingabevielfalt der jeweiligen Eingabekriterien zu eröffnen.

Eine Anordnung, bei für die Durchführung von Mikrowellen-Garungsprozessen und thermischen Garungsprozessen sowie für zeitliche Abläufe eigene Eingaben- und Anzeigeelemente angeordnet sind, ist zur Lösung der gestellten Aufgabe vorteilhaft dadurch gekennzeichnet, daß die Funktionseingabeelemente eine durch die Steuerschaltung veränderbare Ansteuerteistung aufweisen, so daß die ihnen zugeordneten Leuchtanzeigeelemente bei Eingabebereitschaft gegenüber bereits eingegebenen und/oder gegenüber ablaufenden Funktionswerten mit veränderter Helligkeit und/oder Farbe aufleuchten. Durch entsprechende Wahl der lichterzeugenden Elemente kann beispielsweise eine Farbverschiebung bzw. Farbänderung in diesem Zusammenhang realisiert werden. Nach einer bevorzugten Ausgestaltung ist die erfindungsgemäße Anordnung jedoch dahingehend weitergebildet, daß die den eingabebereiten Funktionseingabeelementen zugeordneten Leuchtanzeigeelemente mit verringerter Leistung durch die Steuerschaltung angesteuert werden. Es erweist sich in diesem Zusammenhang als brauchbare Maßnahme, wenn diese besagten, den eingabebereiten Funktionseingabetasten zugeordneten Leuchtanzeigeelemente derart angesteuert werden, daß ihre Leuchtstärke auf annähernd den halben Wert der Leuchtstärke der Anzeigeelemente, die eingegebene oder ablaufende Funktionswerte anzeigen, reduziert wird.

Bevorzugterweise sind die Leuchtanzeigeelemente für die Anzeige von -numerischer Zeichen und von Symbolen Leuchtsegmentanzeigen und für ledigliche Anzeige von Schaltzuständen der Eingabeorgane-Leuchtdioden.

Mit Hilfe der erfindungsgemäß getroffenen Maßnahmen ist die Anordnung zur Eingabe und Anzeige von Einstellwerten in Haushaltsherden im besonderem Maße ertüchtigt, Bedienungspersonen nicht nur die eingegebenen und durchgeführten Eingabekriterien anzuzeigen und ggf. einen Hinweis auf den nächsten erforderlichen Schritt zu geben, sondern auch die jeweils gegebene Vielfalt der noch gegebenen Eingabemöglichkeiten zu signalisieren.

Anhand eines durch die Zeichnung sinnbildlich veranschaulichten Ausführungsbeispiels wird eine nach den Merkmalen der Erfindung ausgestattete Anordnung, insbesondere im Hinblick auf deren Benutzeroberfläche näher beschrieben.

Es zeigen :
- Fig. 1: ein Eingabe-Anzeigefeld für einen Haushaltsherd, in Verbindung mit einem vereinfachten Blockschaltbild und
- Fig. 2: die Eingabe-/Anzeigefelder, wie sie in der Bedienfront eines Haushaltherdes neben den Bedienelementen von Kochfeldern angeordnet sind.

Über ein von Versorgungsstrom U gespeistes Netzteil 1 wird ein Mikroprozessor 2 mit Strom versorgt. Dieser Mikroprozessor 2 schaltet über eine Mehrzahl von Leistungsrelais 3 über deren Relaisschalter 4 Versorgungsstrom an Leistungsverbraucher, wie Leistungswiderstände zur Abgabe von thermischer Energie zu Garungszwecken, Mikrowellen-Generatoren zur Abgabe von Mikrowellenenergie ebenfalls zu Garungszwecken und/oder Motoren zum Antrieb von Umluftgebläsen.

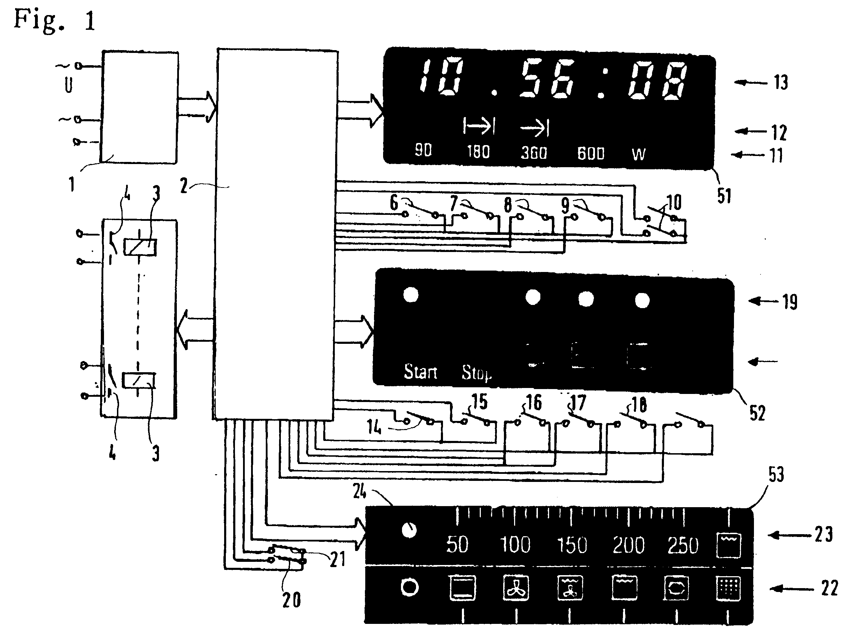

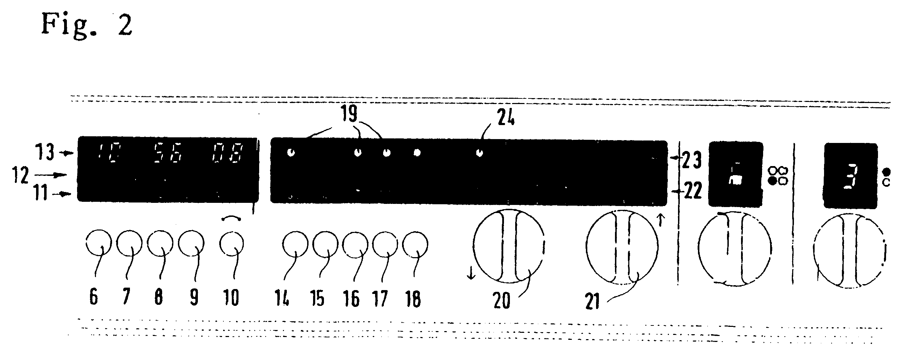

Über ein Eingabe-/Anzeigefeld 5 erfolgt die Eingabe und Anzeige der Garungsprozeß-Kriterien für den Mikroprozessor 2. Dieses Eingabe-/Anzeigefeld nach Figur 2 ist in Figur 1 aufgeteilt dargestellt in Anzeigefelder 51, 52, 53 mit zugeordneten Schaltersymbolen anstelle der Eingabeorgane.

Über Tasten 6, 7, 8, 9 sind wahlweise je nach Vorgabe Mikrowellen-Leistungswerte gemäß Anzeigezeile 11 oder zeitbedingende Kriterien (Tasten 7, 8) entsprechend der Anzeigesymbolik in der Anzeigezeile 12 eingebbar. Wenn eine der Tasten 6, 7, 8, 9―betätigt ist, kann gleichzeitig über einen Drehschalter 10 eine Zeiteingabe erfolgen, die in der Anzeigezeile 13 angezeigt wird. Die Eingabetasten 14, 15, 16, 17, 18 sind der Funktionseingabe "Start", "Stop", "Kurzzeitwecker", zugeordnet, Kombinationsbetrieb mit Zeitsteuerung und "thermischer Heizung mit Zeitsteuerung" : im Anzeigebereich darüber signalisieren Leuchtdioden 19 deren Betriebszustand. Ein Funktionseinstell-Drehschalter 20 dient zur Eingabe von Garungsprozeßvarianten, die in der darüberliegenden unteren Anzeigezeile 22 dargestellt sind, während der Drehschalter 21 zur Einstellung von Temperaturwerten innerhalb des Garraums dient ; die eingestellten Werte werden in der darüber angeordneten oberen Anzeigezeile 23 angezeigt und die Funktion des Backofentemperaturreglers durch eine Leuchtdiode 24 signalisiert.

Die Symbole in der Anzeigezeile 22, die dem Funktionseinstell-Drehschalter 20 zugeordnet sind, haben von links nach rechts folgende Bedeutung "0-Stellung", "Ober- und Unterhitze", "umluftbetrieb", "Intervallgrillen mit Umluftbetrieb", "Grillen", "Bratautomatik" und "Pyrolythische Selbstreinigung". Oberhalb des bis 250° reichenden Temperaturbereichs für den normalen Back- und Bratbetrieb kann durch den Temperatur-Drehschalter 21 die Grill-Heizleistung angesteuert werden.

In der Anzeigezeile 13 erscheinen, solange keine sonstigen eingegebenen Zeitwerte zur Anzeige gebracht werden sollen, die Tageszeiten. Mit Ausnahme der Einstellung des Funktionseinstell-Drehschalters 20 auf die Betriebsarten "Bratautomatik" und "Pyrolythische Selbstreinigung"können Einstellwerte für den Mikrowellenbetrieb über die Eingabetasten 6 bis 9 entsprechend derdarüber angeordneten Symbolik und die dazu gehörigen Zeitwerte mit Hilfe des Drehschalters 10 eingegeben werden, wobei diese Zeitwerte nunmehr anstelle der Tageszeit in der Anzeigezeile 13 angezeigt werden. Diese Eingabebereitschaft wird signalisiert durch die halbhelle Ausleuchtung der Anzeigezeile 11. Bis zur Eingabe von Mikrowellen-Einstellwerten ist auch die Anzeigezeile 12 halbhell ausgeleuchtet. Nach der Eingabe von Mikrowellenwerten wird die diesen Werten zugeordnete Symbolik auf helle Ausleuchtung gesteuert, während die übrigen Symbole der Zeile 11 zur Anzeige der Bereitschaft für weitere Eingaben auf halbe Helligkeit weiter angesteuert werden. Dagegen wird die Symbolik der Anzeigezeile 12 dunkel gesteuert.

Gesondert oder parallel dazu kann der Funktionseinstell-Drehschalter 20 ebenfalls auf eine Betriebsart entsprechend der mit halber Helligkeit ausgeleuchteten Symboliken der Anzeigezeile 22 eingestellt werden. Bei bereits eingestellter Mikrowellenleistung sind die Betriebsarten "Bratautomatik" und "Pyrolythische Selbstreinigung" nicht möglich und entsprechend sind die zugeordneten Symbole auch dunkel gesteuert. Die Temperaturskala in der Anzeigezeile 23 ist ursprünglich ebenfalls mit halber Helligkeit ausgeleuchtet. Wird durch den Funktionseinstell-Drehschalter 20 eine Betriebsfunktion ausgewählt, so leuchtet die zugeordnete Symbolik hell auf, während die übrigen Funktionssymbole in der Anzeigezeile 22 erlöschen. Bei einer Einstellung der Backofentemperatur durch den Temperatur-Drehschalter 21 leuchtet innerhalb der schwach leuchtenden Temperaturskala in der Anzeigezeile 23 der eingestellte Temperaturbereich hell auf. Die Funktionsüberwachung des Temperaturreglers für die Backofentemperatur signalisiert eine Leuchtdiode 24.

Bei Auswahl der Betriebsarten "Bratautomatik" und "Pyrolythische Selbstreinigung" erlöschen sämtliche weiteren Anzeigesymbole, da dann weitere Eingaben ohnehin nicht möglich sind. Eine Ausnahme bildet die Symbolik für die Starttaste 14, da diese Taste zum Start dieser Betriebsarten betätigt werden muß. Ebenso dient diese Taste zum Start des Garbetriebs mit Mikrowellenleistung.

Wird die Taste 17 betätigt, so wird die eingestellte thermische Heizung für den Backofen zeitlich parallel mit der eingestellten Mikrowellenleistung angesteuert. Bei betätigter Eingabetaste 18 wird die Zeitsteuerung lediglich für den thermischen Heizbetrieb im Backofen benutzt. In diesem Fall ist eine Eingabe- und Abarbeitung von Mikrowellenwerten nicht möglich. Dies wird durch Dunkelsteuerung der Anzeigesymbole in der Anzeigezeile 11 signalisiert.

## Patentansprüche

1. Anordnung zur Eingabe und Anzeige von Einstellwerten in Elektroherden zur Steuerung der Energiezuleitung an die thermischen und/oder hochfrequenten Heizquellen unter Verwendung einer Temperatur-Zeit-Steuerung, über die der beginn und das Ende der Energiezufuhr und das dazwischen abzuarbeitende Temperatur-Zeit-Profil für die durch Eingabe vorgegebenen Garungsprozesse sowie die dafür eingesetzten Funktionseinheiten steuerbar sind unter Verwendung einer Mehrzahl von Funktions-Eingabeelementen und diesen zugeordneten Leucht-Anzeigeelementen in einem Eingabe-/Anzeigefeld des Elektroherdes zur Eingabe und Anzeige der erforderlichen Garungsprozeß-Kriterien, **dadurch gekennzeichnet**, daß die Funktionseingabeelemente eine durch die Steuerschaltung veränderbare Ansteuerleistung aufweisen, so daß die ihnen zugeordneten Leuchtanzeigeelemente bei Eingabebereitschaft gegenüber bereits eingegebenen und/oder gegenüber ablaufenden Funktionswerten mit veränderter Helligkeit und/oder Farbe aufleuchten.

2. Anordnung nach Anspruch 1, dadurch gekennzeichnet, daß die den eingabebereiten Funkionseingabeelementen zugeordneten Leuchtanzeigelemente mit verringerter Leistung durch die Steuerschaltung angesteuert werden.

3. Anordnung nach Anspruch 2, dadurch gekennzeichnet, daß die Ansteuerleistung für die den eingabebereiten Funktionseingabeelementen zugeordneten Leuchtanzeigeelemente derart bemessen ist, daß deren Leuchtstärke gegenüber der vollen Leuchtstärke für die Anzeige der eingegebenen und/oder ablaufenden Funktionswerte auf die Hälfte herabgesetzt ist.

4. Anordnung nach einem der Ansprüche 1 bis 3, dadurch gekennzeichnet, daß die Leuchtanzeigeelemente für die Anzeige von alpha-numerischen Zeichen und von Symbolen Leuchtsegmentanzeigen sind.

## Claims

1. Arrangement for the input and indication of setting values in electrical cookers for the control of the energy supply to the thermal and/or high-frequency heating sources with the use of a temperature-time control, by way of which the beginning and the end of the energy supply and the temperature-time profile to be followed therebetween for the cooking processes preset by input as well as the functional units used for these are controllable with the use of a plurality of function input elements and luminous indicating elements associated with these in an input/indicating field of the electrical cooker for the input and indication of the required cooking process criteria, characterised thereby, that the function input elements display a driving power variable by the control circuit, so that the luminous indicating elements associated with them, when ready for input, light up with a brightness and/or colour that is varied relative to function values which have already been entered and/or are already taking their course.

2. Arrangement according to claim 1, characterised thereby, that the luminous indicating elements associated with the function input elements ready for input are driven at reduced power by the control circuit.

3. Arrangement according to claim 2, characterised thereby, that the driving power for the luminous indicating elements associated with the function input elements ready for input is dimensioned in such a manner that their luminous intensity is reduced to half of the full luminous intensity for the indication of the function values which have been entered and/or are taking their course.

4. Arrangement according to one of the claims 1 to 3, characterised thereby, that the luminous indicating elements for the indication of alpha-numeric characters and of symbols are luminous segment indicators.

## Revendications

1. Dispositif pour l'entrée et l'affichage de valeurs de réglage dans des cuisinières électriques à des fins de commande de l'alimentation en énergie des sources de chauffage thermiques et/ou à haute fréquence utilisant un réglage température-temps, qui permet de contrôler le début et la fin de l'alimentation en énergie ainsi que la courbe température-temps entre ces deux points pour les processus de cuisson prédéterminés par l'entrée de données ainsi que les unités fonctionnelles utilisées, comportant dans une zone d'entrée/affichage de la cuisinière, une pluralité d'éléments d'entrée de fonction et d'éléments d'affichage lumineux associés à ceux-ci pour l'entrée et l'affichage des caractéristiques de cuisson nécessaires, caractérisé en ce que les éléments d'entrée de fonction présentent une puissance d'excitation qui est modifiée par le circuit de commande, de telle sorte que les éléments d'affichage lumineux qui leur sont associés brillent avec une luminosité et/ou une couleur différente par rapport aux données de fonction déjà entrées et/ou en cours de déroulement, lorsque le dispositif est prêt pour l'entrée des données.

2. Dispositif selon la revendication 1 caractérisé en ce que les éléments d'affichage lumineux associés aux éléments d'entrées de fonction prêts à l'entrée de données sont alimentés avec une puissance réduite par le circuit de commande.

3. Dispositif selon la revendication 2 caractérisé en ce que la puissance d'excitation des éléments d'affichage lumineux associés aux éléments d'entrée de fonction prêts à l'entrée de données est telle, que leur intensité lumineuse est ramenée à la moitié de la pleine puissance lumineuse pour l'affichage des données de fonction entrées et/ou en cours de déroulement.

4. Dispositif selon l'une des revendications 1 à 3 caractérisé en ce que les éléments d'affichage lumineux sont des éléments d'affichage lumineux à segments pour l'affichage de signes alpha-numériques.
